(19) Europäisches Patentamt

European Patent Office

Office européen des brevets

(11) Veröffentlichungsnummer : **0 191 337**
**B1**

(12) **EUROPÄISCHE PATENTSCHRIFT**

(45) Veröffentlichungstag der Patentschrift :
24.01.90

(21) Anmeldenummer : 86100989.2

(22) Anmeldetag : 24.01.86

(51) Int. Cl.⁵ : **B 29 C 67/14, B 29 D 1/00**

(54) **Gewindeelement.**

(30) Priorität : 13.02.85 DE 3504829

(43) Veröffentlichungstag der Anmeldung :
20.08.86 Patentblatt 86/34

(45) Bekanntmachung des Hinweises auf die Patenterteilung : 24.01.90 Patentblatt 90/04

(84) Benannte Vertragsstaaten :
AT BE CH DE FR GB IT LI NL SE

(56) Entgegenhaltungen :
DE—B— 1 084 088
DE—C— 1 267 827
FR—A— 2 380 459
GB—A— 924 836
GB—A— 1 020 090
US—A— 3 495 494
US—A— 3 859 409

(73) Patentinhaber : Röchling Haren KG

D-4472 Haren Ems 1 (DE)

(72) Erfinder : Seidel, Eberhard, Dipl.-Ing.
Auf der Heide 19
D-6301 Wettenberg 2 (DE)

(74) Vertreter : Busse & Busse Patentanwälte
Postfach 1226 Grosshandelsring 6
D-4500 Osnabrück (DE)

**Beschreibung**

Die Erfindung betrifft ein Gewindeelement nach dem Oberbegriff des Anspruchs 1, ein Verfahren zu seiner Herstellung nach dem Oberbegriff des Anspruchs 7 wie auch eine Vorrichtung zur Durchführung des Verfahrens nach dem Oberbegriff des Anspruchs 9 bzw. des Anspruchs 11.

Ein derartiges Gewindeelement ist aus US-A-3 859 409 bekannt.

Trotz des hohen Entwicklungsstandes traditionell aus einstückigem Metall gefertigter Gewindeelemente haben Gewindeelemente aus Fasermaterial in einer Matrix-Einbettung einen festen Platz in der Praxis erlangen können. Bedeutsam hierfür ist insbesondere die Eignung für spezielle Anforderungen, etwa hinsichtlich elektrischer oder thermischer Isolierung, chemischer Resistenz oder einer Materialanpassung an andere Werkstoffe. Gewindeelemente der dabei zu betrachtenden Art sind in erster Linie Gewindestangen, Gewindebolzen und dergleichen Außengewindeelemente, wenngleich für Innengewindeelemente wie Gewinderohre oder Gewindemuttern bei entsprechenden Anforderungen und Belastungen ganz ähnliche Gesichtspunkte wie für die Außengewindeelemente zutreffen.

Hinsichtlich des Materials herrscht in der Praxis nach wie vor die Glasfaser in einer Kunstharz-Matrix vor. Die nachfolgende Betrachtung ist aber keineswegs auf diese Materialkombination eingeschränkt. Es versteht sich, daß an die Stelle der Glasfaser ohne weiteres Kohlefasern, Aramidfasern, Polyesterfasern eingesetzt werden können und daß neben Duroplasten wie Epoxidharz, Polyesterharz, Silikonharz oder Polyimid auch Thermoplaste in Betracht kommen. Darüber hinaus läßt sich die nachfolgende Betrachtung auch auf Materialkombinationen von bisher geringerer praktischer Bedeutung wie im Kohlenstoff eingelagerter Kohlefaser oder in Keramik eingelagerter Borfaser anwenden.

Die Beanspruchungen eines Gewindeelements werden am Beispiel einer Gewindestange deutlich, die in einem Einsatz als Zugstange insgesamt auf Zug belastet wird, wobei diese Belastung unter Scherbeanspruchung der Gewindegänge auf ein Mutterelement zu übertragen ist und wobei zusätzlich beim Anziehen oder Lösen der Mutter Torsionsmomente aufgebracht werden.

Da für die Festigkeit faserverstärkter Werkstoffe vorrangig der Faseranteil maßgeblich ist und im Sinne hoher Festigkeiten die Bemühungen der Fachwelt dazu geführt haben, den Faseranteil in den Verbundmaterialien zu erhöhen, sind die Bemühungen um feste Gewindeelemente in der Richtung verlaufen, daß man im Kernbereich eines Gewindeelements eng aneinanderliegend parallele Fasern anordnete, die in einem Mantelbereich in Anschmiegung an das Gewindeprofil wellig verlaufen sollten. Indem diese Gewindeelemente in einer Form hergestellt wurden, konnte eine spanlose Formgebung verwandt und damit ein Zerschneiden der außenliegenden Fasern vermieden werden.

Die Entwicklung der so geschaffenen Gewindeelemente ist allerdings an Grenzen gestoßen, wobei das Abscheren der Gewindegänge, das Aufbrechen des Faserstrangs längs radialer Ebenen und das Abscheren zylindrischer Außenbereiche gegenüber zylindrischen Innenbereichen infolge von Momentenbeanspruchungen typische Bruchbilder waren. Zur Verbesserung der Torsionsfestigkeit ist bereits versucht worden, diagonal verlaufende Verstärkungseinlagen in die Faserstränge einzubringen, jedoch hat sich damit weder die Abscherfestigkeit der Gewindeprofile noch — angesichts der in beiden Drehrichtungen auftretenden Torsionsmomente — die Torsionsfestigkeit generell erhöhen lassen.

Aus der US-A-3 859 409 ist ein Gewindeelement aus Fasermaterial in einer Matrix-Einbettung bekannt, wobei die Fasern endlos oder langfaserig vorwiegend in axialer Längsrichtung verlaufen und auch das Gewindeprofil ungeschnitten durchziehen, wobei das Fasermaterial zumindest in einem das Gewindeprofil ausbildenden Mantelbereich vorwiegend schräg zur Längsrichtung des Elements schraubig verläuft. Praktische Erfahrungen mit dieser einfachen Anpassung des Faserverlaufs an den Gewindeverlauf haben gezeigt, daß sich damit die Fasern zwar sehr gut in die Gewindegänge einpassen lassen, zumal sie dabei nicht geknickt oder scharf gebogen werden müssen, daß aber dabei ein gutes Torsionsverhalten allenfalls in einer Beanspruchungsrichtung erzielt wird, während Torsionsbeanspruchungen in der Gegenrichtung wie auch Zugbeanspruchungen auf das Gewinde in axialer Richtung sehr schnell zu Abschererscheinungen und Rissen führen.

Aus der US-A-3 495 494 sind neben faserverstärkten Gewindeelementen auch Vorrichtungen zu deren Herstellung zu entnehmen. Dabei wird u. a. eine Vorrichtung zur Formung eines Sechskant-Hohlstabs mit Innengewinde in einer zweiteiligen Form vorgeschlagen, die ein kolbenartig einschiebbares Formteil und ein dieses kolbenartig einschiebbare Formteil umfassendes zweites Formteil umfaßt. Soweit dabei nur ein Außensechskant angeformt ist, kann eine solche Form — bei Vorgabe eines ausreichenden Bewegungsspiels — verwendbar sein, zumal eine geringe Gratbildung an den Fugen zwischen dem kolbenartig einschiebbaren Formteil und dem umschließenden Formteil nicht allzu kritisch ist.

Zur Ausformung von Gewindebereichen selbst hat sich die Verwendung einer zweiteiligen Form nicht als brauchbar erwiesen, da die Passungsprobleme zwischen den beiden Formteilen schwer beherrschbar sind. Eine hinreichend enge und gegenüber dem Preßdruck starre Auslegung des umschließenden Formteils gegenüber dem einzuschiebenden Formteil würde zu einer nicht mehr akzeptablen Schwergängigkeit führen, während ein Bewegungsspiel zwischen den beiden Teilen Gratbildungen hervorruft und durch Einklemmen von Fasermaterial eine Störungsgefahr bildet.

In der vorgenannten US-A-3 495 494 ist auch eine Vorrichtung zur Herstellung eines hohlen Außengewindeelements mit einer mehrteiligen, zur Entnahme des Gewindeelements öffenbaren Form beschrieben, die einen aufweitbaren und an eine Druckmittelquelle für ein flüssiges oder gasförmiges Druckmittel anschließbaren Schlauch umfaßt. Über einen einseitigen Druckanschluß läßt sich dabei zwar ein hinreichender Innendruck auf das hohle Gewindeelement aufbringen, die Handhabung ist allerdings unbefriedigend, da Luft- oder Gaseinschlüsse bei einem hydraulischen Druckmittel nur schwer aus dem Schlauch zu entfernen sind und weil auch die häufig benötigte Temperierung des Druckmittels mit einem Aufheiz- und einem Abkühlzyklus schwer zu realisieren ist.

Aufgabe der Erfindung ist es, ein Gewindelement aus Fasermaterial in einer Matrix-Einbettung zu schaffen, welches ohne besonderen Material- und Fertigungsaufwand hierzu eine wesentliche Verbesserung der Festigkeit gegenüber bekannten Gewindeelementen insbesondere beim Anziehen und Lösen des Gewindes ermöglicht. Aufgabe der Erfindung ist es weiterhin, ein verbessertes Herstellungsverfahren und eine verbesserte Herstellvorrichtung für ein solches Gewindeelement zu schaffen.

Gemäß der Erfindung wird die Aufgabenstellung zunächst von einem Gewindelement nach dem Oberbegriff des Anspruchs 1 ausgehend mit den kennzeichnenden Merkmalen des Anspruchs 1 gelöst.

Es hat sich gezeigt, daß der bisher eingeschlagene Weg zur Fertigung von Gewindeelementen mit engliegenden und parallelgerichteten Fasern zwar zu einem hohen Glasfaseranteil führt, daß dies allein aber keineswegs zu den ins Auge gefaßten Festigkeitswerten gereicht. Auf derartige Weise ist lediglich eine brauchbare Zugfestigkeit zu erreichen. Demgegenüber ist die Abscherfestigkeit der Gewindegänge unzulänglich, weil sich die Fasern eines parallelfaserigen Stranges aufgrund gegenseitiger Anlagereibung nur schwer gegeneinander verschieben, so daß die außenliegenden Fasern kaum in eine hinreichend wellige Form zu bringen sind. Die Geewindegänge werden vielmehr nur unzulänglich durch Fasern verstärkt. Der Versuch, eine bessere Faserverteilung im Bereich des Gewindeprofils mit stärkeren Verformungskräften zu erzwingen, führt eher dazu, daß die Glasfasern an den Gewindeflanken frei liegen, wodurch sich beim Schrauben höhere Gewindereibung und damit um so größere Torsionsmomente ergeben, die für den Verband paralleler, längslaufender Fasern sehr gefährlich sind. An diesen Nachteilen ändert sich auch nichts Grundlegendes, wenn die Fasern in einem schraubenförmigen Verlauf an die Ausrichtung der Gewindegänge angepaßt werden. Dieser Verlauf kann eine gewisse Verbesserung gegen eine Momentenbelastung in einer Drehrichtung erzeugen, führt in der Gegenrichtung aber auf um so schlechtere Ergebnisse. Auch die Zugfestigkeit der Gewinde wird eher verschlechtert, zumal es bei einer Verankerung der außenliegenden Gewindefasern mit den darunterliegenden Bereichen fehlt.

Die mit der erfindungsgemäßen Lösung erzielte einschneidende Verbesserung der Festigkeitswerte beruht demgegenüber darauf, daß die Fasern im Mantelbereich teils mit rechtsgängiger und teils mit linksgängiger Ausrichtung verlaufen und vor allem mit tieferliegenden Fasern durch textile Verkettungen verankert sind. Dadurch wird eine verbesserte Faserverstärkung im Profilbereich des Gewindes, und zwar in jeder Drehrichtung, eine bessere Zugfestigkeit erzielt, die insbesondere mit einer einschneidend verringerten Abscherneigung einhergeht.

Die Einformung des Gewindes in die teils rechtsteils linksgängig verlaufenden Fasern ermöglicht es auch, eine vorwiegend aus Matrixmaterial gebildete Oberfläche an den profilflanken zu erzielen, so daß beispielsweise bei GFK-Schrauben mäßige Anzugs- und Torsionsmomente eingehalten werden. Der teils rechtsgängige, teils linksgängige Faserverlauf im Mantelbereich in Verbindung mit einer textilen Verkettung des Mantelbereichs nach innen hin schafft aber auch eine verbesserte und richtungsunabhängige Torsionsaufnahme. Die miteinander verankerten Fasern neigen weder zu einem Aufspalten noch zu einem zylindrischen Abscheren zwischen Mantel und Verankerungsbereich.

Hinsichtlich der textilen Verkettungen kann auf eine Fülle von Techniken aus dem Textilbereich zurückgegriffen werden. So können gewebte bzw. geflochtene Gewebeschläuche verwandt werden, die z. B. unter 45° zur Längsrichtung verlaufende Fasern enthalten und am Umfang wechselnde Faserrichtungen schaffen. Mit bekannten Techniken lassen sich derartige Schläuche starkwandig herstellen, so daß bei Gewindestäben ein Größtteil des Querschnittes mit einem solchen Schlauch ausgefüllt wird. Der Schlauch liefert damit auch einen Verankerungsbereich zu den inneren Schichten hin, wobei der vom Schlauch freigelassene Innenbereich bedarfsweise durch Längsfasern gefüllt werden kann, um die Zugfestigkeit des Gewindes zu verbessern.

Schrägverlaufende Fasern wechselnder Richtung lassen sich auch mit Hilfe von Wickeltechniken erzielen, wenngleich die geringere Verankerung zwischen den Wickelschichten besonders zu beachten bleibt.

Textile Verkettungen der hier in Betracht zu ziehenden Art lassen sich auch mit Wirk- und Stricktechniken schaffen. Weniger regelmäßige aber durchaus brauchbare Faserverläufe ergeben sich auf der Grundlage von Faservliesen, wobei auch zu einem Strang gezogenes Streifenmaterial oder aufgerolltes Flachmaterial Anwendung finden kann. Eine weitere, auch zusätzlich anwendbare Möglichkeit zur textilen Verkettung ist die mechanische Vernadlung, wie sie zur Verfestigung von Spinnvliesen bekannt ist und wobei Fäden mit Hilfe von Widerhaken-Nadeln gezogen werden und damit zur Verankerung erwünschte Verschlingungen herbeiführen. Von außen her kann auch Faser- oder Garnmaterial durch Vernähen und Versteppen eingebracht werden. Diese Verkettungen werden dann so gelegt, daß sie vorwiegend senkrecht zur Gewindeoberfläche verlaufen und den Mantelbereich mit tieferliegenden Schichten verankern.

Zur Lösung der Aufgabe ist weiterhin von einem Verfahren nach dem Oberbegriff des Anspruchs 7 ausgehend eine Lösung mit den kennzeichnenden Merkmalen dieses Anspruchs vorgesehen. Um zu einer hohen Abscherfestigkeit für das Gewindeprofil ein Eindringen des Fasermaterials in die Profilgänge zu erzwingen, ist ein ausreichender Quetschdruck erforderlich. Dieser kann durch das Aufpressen der Form bzw. einzelner Formteile von außen erfolgen, wobei Lufteinschlüsse z. B. durch Arbeiten unter Vakuum zu vermeiden oder durch Formspalte, Vakuumleitungen u. dgl. zu beseitigen sind.

Letzteres gilt auch dann, wenn der Quetschdruck von innen aufgebracht wird, wenn nämlich ein hohles Außengewindeelement hergestellt werden soll, wobei der Innenraum zum Aufbringen von Quetschdruck mittels einer verformbaren Füllung erfolgen kann. Diese Füllung kann eine gasförmige, flüssige oder pastose Masse sein. Aus Handhabungsgründen wird vorzugsweise ein verformbares Formteil vorgesehen.

Zur Lösung der Aufgabe ist weiterhin vorgesehen, Vorrichtungen nach den Oberbegriffen der Ansprüche 9 oder 11 mit den kennzeichnenden Merkmalen dieser Ansprüche auszugestalten. Nach dem Anspruch 9 ergibt sich mit einer vierteiligen Form die Möglichkeit, den erforderlichen Quetschdruck über zwei kolbenartig einschiebbare Formteile aufzubringen, die beidseitig zwischen einem Unterteil und einem Oberteil spielfrei gehalten werden können, ohne daß die Gesamtform zum Festklemmen neigt.

Bei einer Vorrichtung nach dem Anspruch 11 ist es möglich, die Druckleitungen beispielsweise über eine Pumpe und ein Reservoir miteinander zu verbinden, so daß der Schlauch unproblematisch entleert und befüllt werden kann, ohne daß Luft im Schlauch zurückbleibt. Insbesondere kann die Pumpe auch Druckmittel der gewünschten Temperierung für ein schnelleres Aushärten und Abkühlen in den Schlauch hinein- und aus diesem herausfördern.

Weitere Merkmale der Erfindung ergeben sich aus den Ansprüchen. Ein Ausführungsbeispiel des Gegenstands der Erfindung ist in der Zeichnung dargestellt und wird nachfolgend näher erläutert. In der Zeichnungen zeigen :

Fig. 1 Längsschnitt durch einen Ausschnitt aus einem Gewindestab,

Fig. 2 Abschnitt eines Faserstrangs zur Herstellung eines Gewindestabs nach Fig. 1,

Fig. 3 Stirnansicht nach Linie III-III in Fig. 2,

Fig. 4, 5 u. 6 Querschnitt durch eine Form zur Herstellung eines Gewindestabs in aufeinanderfolgenden Schließstellungen, und

Fig. 7 Längsschnitt durch eine andere Form zur Herstellung eines Gewindestabs.

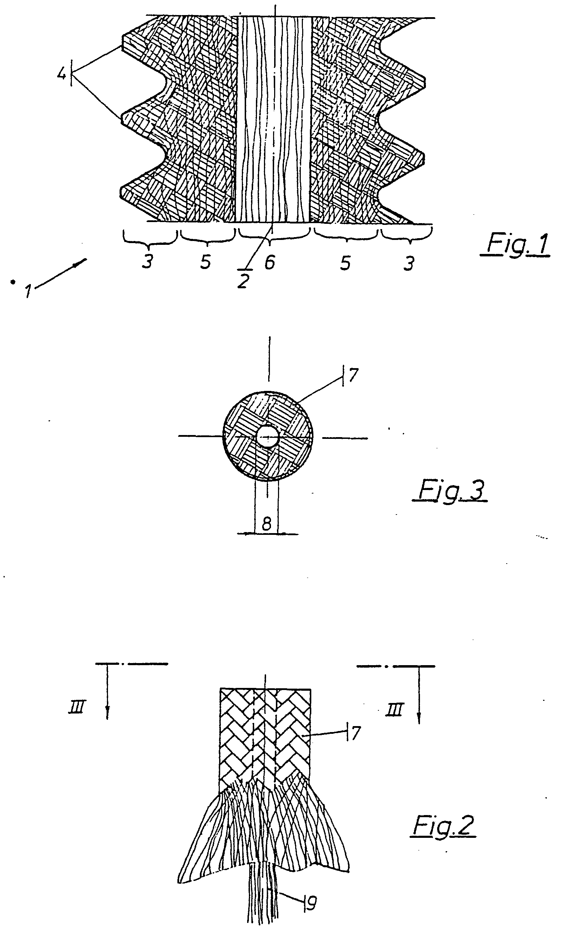

Der in einem abschnittsweisen Längsschnitt in Fig. 1 dargestellte, insgesamt mit 1 bezeichnete Gewindestab ist als Prototyp für viele Gewindeelemente mit Außengewinde insoweit zu verstehen, als die auch bei sonstigen Gewindeelementen auftretenden Belastungen in Form einer Zugkraft in Längsrichtung, eines Torsionsmoments beim Aufschrauben eines Innengewindeelements oder Einschrauben in ein solches und auf das Profil wirkende Abscherkräfte zu berücksichtigen sind. Diese Belastungen treten auch im Querschnitt des Gewindestabs ungleichmäßig auf — die Abscherkräfte wirken in erster Linie auf die Profilausformungen, das Torsionsmoment greift in den profilnahen äußeren Bereichen stärker an als nahe einer in Fig. 1 mit 2 bezeichneten Längsachse, während die Zugkräfte in einem solchen Element breit über den Querschnitt verteilt sind.

Zur Beherrschung dieser Belastungen hat es sich als zweckmäßig herausgestellt, den Querschnitt bereichsweise zu unterscheiden und in dieser Hinsicht einen außenliegenden Mantelbereich 3, der den Bereich umfangsseitiger Profilgänge 4 umfaßt, und einen weiter zur Achse liegenden Verankerungsbereich 5 vorzusehen, der mehr oder weniger dicht an die Achse 2 heranreicht und auch restlos bis zur Achse nach innen reichen kann. Im vorliegenden Fall ist ein Kernbereich 6 übrig gelassen.

Der dargestellte Gewindestab 1 verwendet als Fasermaterial Glas und als Matrix ein Duroplast, nämlich Epoxydharz, insofern eine bekannte GFK-Materialpaarung. Die Glasfasern sind allerdings im Gewindestab nicht schlicht in Längsrichtung geführt, sondern bestehen zu einem großen, den Mantelbereich 3 und den Verankerungsbereich 5 umfassenden Teil aus einem gewebten bzw. geflochtenen Gewebeschlauch, was in der Zeichnung symbolisch durch eine überlagerte Schachbrettschraffur angedeutet ist. Dieser Gewebeschlauch weist am Umfang schräg (windschief) zur Achse 2 verlaufende Fasern auf, die sich sehr viel besser als längsverlaufende Fasern und ohne die Notwendigkeit zu einem Längenausgleich über den Mantel des Gewindestabs hin in das Gewindeprofil hineinformen lassen. Damit ergibt sich die gewünschte Verfestigung des Gewindeprofils gegenüber Scherkräften. Gleichzeitig wird auch die Momentenaufnahme durch Fäden verbessert, die miteinander verwoben sind und eine zwar wechselnde aber jeweils auch mit einer Richtungskomponente in Umfangsrichtung weisende Orientierung besitzen. In Bezug auf die Momentenbelastung ist weiterhin günstig, daß die leicht in die Gewindeprofilierung umformbaren Fäden des Mantelbereichs zumindest weitgehend durch Matrix abgedeckt sind und somit hohe Reibbeiwerte vermeiden, die durch bloßliegende Fasern bedingt wären.

Die Fasern des Mantelbereichs 3 sind mit der Gewebestruktur tief nach innen hin verankert, so daß sich auch die Gefahr eines Abscherens des Mantelbereichs gegenüber dem Stabinneren aus-

schließen läßt.

Der Kernbereich 6 mit längsgerichteten Fasern ist ohnehin nicht wesentlich mit Torsionsmomenten belastet und dementsprechend auf die Aufnahme von Längskräften ausgerichtet. Dazu ist er mit längslaufenden Fasern verfüllt.

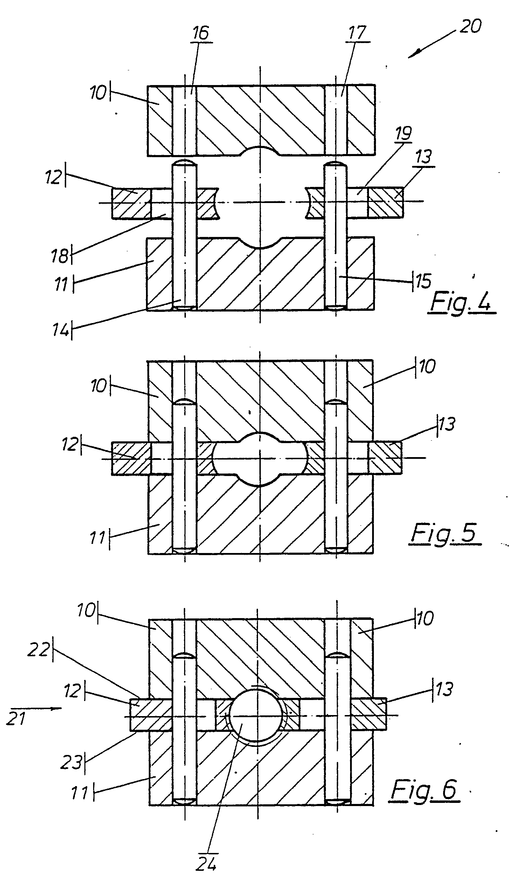

Zur Herstellung eines solchen Gewindeelements lassen sich auch handelsübliche Halberzeugnisse verwenden. Wie aus Fig. 2 und 3 ersichtlich ist, wird zur Herstellung des Faserstranges (vor dem Tränken mit einer Matrix) ein starkwandiger aber vielfädiger Glasfaser-Gewebeschlauch 7 verwandt. Dieser ist marktgängig mit 32 Flechtfäden erhältlich, wobei die hohe Flechtfadenzahl sowohl für eine feinverteilte Orientierungsstruktur des Fasermaterials im Mantelbereich wie auch für eine dichte Verankerung nach innen hin günstig ist. Bedingt durch die Herstellungstechnik des Gewebeschlauchs 7 verbleibt in diesem ein lichter Innenraum 8, mit einem Durchmesser von etwa einem Viertel des Außendurchmessers, in den längsverlaufende Fäden 9 eingezogen werden. Der so geschaffene Faserstrang wird mit Matrix getränkt und in einer Negativform profiliert und verdichtet. Es versteht sich, daß auch im Kern durchgeflochtene Kordeln eingesetzt werden können.

Für eine hinreichend tiefe, torsionsfeste Verankerung ist es im allgemeinen vorauszusetzen, daß die Verankerungstiefe mehr als 10 % des Gewindedurchmessers beträgt. Im allgemeinen wird man bei einem Gewindestab nach dem vorliegenden Ausführungsbeispiel eine Wandstärke von mehr als einem Viertel des Gewindedurchmessers voraussetzen.

Eine Negativform zur Herstellung eines solchen Gewindestabs nach den Fig. 4 bis 6 besteht aus vier Teilen, nämlich einem Oberteil 10, einem Unterteil 11 und zwei Einschubteilen 12 und 13, wobei das lagerichtige Zusammenschieben bzw. Zusammensetzen durch Führungsstifte 14, 15 im Unterteil 11, mit diesen fluchtende Bohrungen 16, 17 im Oberteil 10 und Langlöcher bzw. Schlitze 18, 19 in den Einschubteilen 12 bzw. 13 gewährleistet wird.

In der in Fig. 4 veranschaulichten Ausgangsstellung ist die insgesamt mit 20 bezeichnete Form leicht zu beschicken, da das Oberteil 10 abgehoben ist und die Einschubteile 12 und 13 seitlich ausgerückt sind. Nach Einlegen eines mit Matrix getränkten Faserstrangs wird das Oberteil 10 aufgesetzt (Fig. 5) wodurch sich eine geschlossene aber noch weite Innenform ergibt. Erst mit dem Zusammenschieben der Einschubteile 12 und 13 gemäß Fig. 6 entsteht die gewünschte Negativform. Dabei ist das Einschieben von besonderer Bedeutung, da mit diesem gleichzeitig der gewünschte Quetschdruck auf den Formling ausgeübt wird. Die dabei vorgesehene Preßbewegung darf allerdings nicht dazu führen, daß störende Grate am Gewinde gebildet sind, wenn etwa Trennfugen der Form erst mit Vollendung der Schließbewegung geschlossen werden.

Dementsprechend ist eine kolbenartige Ausbildung der Einschubteile 12 und 13 vorgesehen, d. h., eine Ausbildung mit zu einer Einschubrichtung 21 parallel verlaufenden Trennwänden 22 und 23, die schon vor Erreichen einer geschlossenen Formstellung um eine Negativform 24 gemäß Fig. 6 dichte Fugen zur übrigen Form ausbilden.

Hierzu ist auch dafür Sorge getragen, daß die Flächen bzw. Fugen 22, 23 einen Abstand voneinander haben, der kleiner ist als der Durchmesser der Negativform 24.

Es versteht sich, daß es für die gratfreie Ausbildung des Profils in erster Linie auf eine entsprechende Gestaltung des zuletzt einzuschiebenden Teils der Form ankommt. Der vielteilige Aufbau der Form 20 berücksichtigt Forderungen nach einer leichten Beschickung und Entnahme. Der gewünschte Quetschdruck und die gratfreie Profilierung ließe sich auch mit einer Form herstellen, bei der beispielsweise Oberteil, Unterteil und eines der Einschubteile durch ein einstückiges Formteil ersetzt würden und lediglich auch eines der Einschubteile beweglich bliebe.

Sofern der Formvorgang nicht unter Vakuum erfolgt, ist für eine Entlüftung zu sorgen. Diese kann im allgemeinen durch verbleibende Fugen wie die längs der Flächen 22 und 23 sichergestellt werden, sonst aber sind zusätzliche Entlüftungsöffnungen vorzusehen.

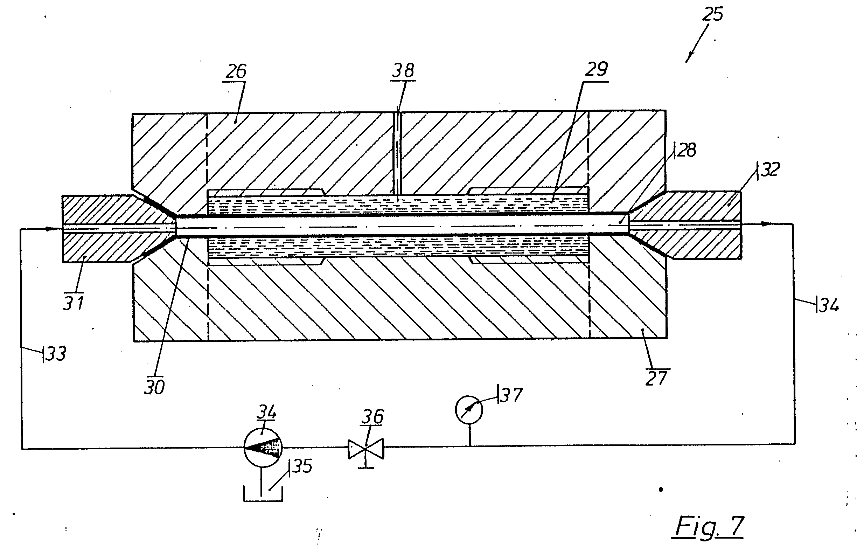

In Fig. 7 ist eine insgesamt mit 25 bezeichnete Negativform zur Herstellung hohler bzw. rohrförmiger Gewindestäbe dargestellt. Die Negativform 25 besitzt ein Oberteil 26 und ein Unterteil 27 mit einer Teilungsebene dazwischen, die durch eine Längsachse 28 geht. Koaxial zu dieser Achse sind ein innerer Formraum 29 mit einem darin angeordneten Formling, z. B. einem mit Matrix getränkten Glasfaser-Gewebeschlauch, ein den Innenraum dieses Gewebeschlauchs ausfüllender elastischer Schlauch 30 und zwei beiderseitige Fittings 31 und 32 für den dichten Anschluß des elastischen Schlauchs 30 an zwei Druckleitungen 33 und 34 angeordnet.

Die Druckleitungen 33 und 34 sind mit Hydraulikflüssigkeit gefüllt und über eine Pumpe 34 mit einem Reservoir 35 sowie ein Absperrventil 36 miteinander verbunden. Ein Manometer 37 erlaubt eine Druckkonktrolle.

Der Formling läßt sich mit Hilfe des druckbeaufschlagten Schlauchs 30 innerhalb der Form aufweiten und umfangsseitig gegen die Form pressen, so daß damit der gewünschte Quetschdruck für den Formvorgang erzielt wird. Um etwa eingeschlossene Luft zu beseitigen, ist eine Entlüftungsöffnung 38 von außen zum Formraum 29 geführt, die auch erforderlichenfalls an eine Vakuumquelle angeschlossen werden kann.

Die vorstehenden Ausführungsbeispiele sind jeweils auf ein Außengewindeelement zu beziehen, welches in der Tat regelmäßig auch die kritischeren Belastungen aufweist, während eine Gewindemutter oder Gewindebohrung im allgemeinen weniger kritische Belastungen erfährt. Grundsätzlich lassen sich die vorstehenden Betrachtungen aber entsprechend auch auf Innengewindeelemente anwenden.

## Patentansprüche

1. Gewindeelement (1), insbesondere Gewindestange, -bolzen, -zapfen o. dgl. Außengewindeelement, aus Fasermaterial in einer Matrix-Einbettung, wobei die Fasern endlos- oder langfaserig vorwiegend in axialer Längsrichtung verlaufen und auch das Gewindeprofil (4) ungeschnitten durchziehen, wobei das Fasermaterial zumindest in einem das Gewindeprofil ausbildenden Mantelbereich (3) vorwiegend schräg zur Längsrichtung des Elements (1) verlaufende Fasern aufweist, dadurch gekennzeichnet, daß die Fasern in dem das Gewindeprofil ausbildenden Mantelbereich (3) teils mit rechtsgängiger und teils mit linksgängiger Ausrichtung verlaufen und mit tieferliegenden Fasern (5) durch textile Verkettungen verankert sind.

2. Gewindeelement nach Anspruch 1, dadurch gekennzeichnet, daß die textilen Verkettungen sich über eine Verankerungstiefe erstrecken, die mehr als 10 % des Gewindedurchmessers beträgt.

3. Gewindeelement nach Anspruch 1 oder 2, dadurch gekennzeichnet, daß der Mantelbereich (3) und der Verankerungsbereich (5) durch einen Gewebeschlauch (7) gebildet sind.

4. Gewindeelement nach Anspruch 3, dadurch gekennzeichnet, daß der Gewebeschlauch (7) eine über ein Viertel des Gewindedurchmessers hinausgehende Wandstärke aufweist.

5. Gewindeelement nach Anspruch 3 oder 4 in Form eines Außengewindeelements, dadurch gekennzeichnet, daß der Gewebeschlauch (7) innen mit axial verlaufenden Fasern (9) gefüllt ist.

6. Gewindeelement nach einem der Ansprüche 1 bis 5, dadurch gekennzeichnet, daß die textilen Verkettungen vorwiegend quer zur Elementachse verlaufende Nähfäden umfassen.

7. Verfahren zur Herstellung eines Gewindeelements nach einem der Ansprüche 1 bis 6, bei dem ein Faserstrang mit einer aushärtbaren Matrix versetzt und zum Aushärten in eine Form eingebracht wird, dadurch gekennzeichnet, daß der Faserstrang in der Weise, daß die Fasern in dem das Gewindeprofil ausbildenden Mantelbereich (3) teils mit rechtsgängiger und teils mit linksgängiger Ausrichtung verlaufen und mit tieferliegenden Fasern (5) durch textile Verkettungen verankert sind, geformt, mit einer Matrix versetzt und in der geschlossenen Form einem zumindest im Gewindebereich wirksamen Quetschdruck ausgesetzt wird.

8. Verfahren nach Anspruch 7 zur Herstellung eines innen hohlen Außengewindeelements, dadurch gekennzeichnet, daß der Quetschdruck von innen nach außen über eine verformbare Füllung im hohlen Innenbereich aufgebracht wird.

9. Vorrichtung zur Durchführung des Verfahrens nach Anspruch 7 oder 8, mit einer mehrteiligen, zur Entnahme des Gewindeelements öffenbaren Form (20), die ein gegenüber anderen Formteilen kolbenartig einschiebbares Formteil (12, 13) umfaßt, dadurch gekennzeichnet, daß die Form (20) vierteilig mit zwei zwischen einem Oberteil (10) und einem Unterteil (11) kolbenartig einschiebbaren Formteilen (12, 13) ausgebildet ist.

10. Vorrichtung nach Anspruch 9, dadurch gekennzeichnet, daß die kolbenartig einschiebbaren Formteile (12, 13) sich etwa über die Länge des Geindeelements erstrecken und quer zu dieser Erstreckung eine Breite aufweisen, die unter dem Durchmesser des Gewindes liegt.

11. Vorrichtung zur Durchführung des Verfahrens nach Anspruch 8 mit einer mehrteiligen, zur Entnahme des Gewindeelements öffenbaren Form, die einen aufweitbaren und an eine Druckmittelquelle (33 bis 37) für ein flüssiges oder gasförmiges Druckmittel anschließbaren Schlauch (30) umfaßt, dadurch gekennzeichnet, daß der Schlauch (30) über beiderseitige Fittings (31, 32) an zwei in einem Druckkreislauf miteinander verbundene Druckleitungen (33, 34) angeschlossen sind.

12. Vorrichtung nach Anspruch 11, gekennzeichnet durch mindestens einen von außen zum Umfangsbereich des Gewindeelements führenden und an eine Vakuumquelle anschließbaren Entlüftungskanal (38).

## Claims

1. A threaded element (1), particularly a threaded rod, bolt, pin or the like externally threaded element, or fibrous material embedded in a matrix, wherein the fibres extend predominantly in the axial longitudinal direction in the form of continuous filaments or long fibres and also pass through the thread profile (4) without being cut, and the fibrous material comprises fibres extending predominantly inclined to the longitudinal direction of the element (1) at least in a peripheral region (3), characterised in that, in the peripheral region (3) forming the thread profile, the fibres extend some with a right-hand and some with a left-hand alignment and are anchored to fibres (5) situated deeper in by textile interlinking.

2. A threaded element according to claim 1, characterised in that the textile interlinking extends over an anchoring depth which amounts to more than 10 % of the thread diameter.

3. A threaded element according to claim 1 or 2, characterised in that the peripheral region (3) and the anchoring region (5) are formed by a flexible fabric tube (7).

4. A threaded element according to claim 3, characterised in that the flexible fabric tube (7) has a wall thickness exceeding a quarter of the thread diameter.

5. A threaded element according to claim 3 or 4 in the form of an externally threaded element, characterised in that the flexible fabric tube (7) is filled with fibres (9) extending axially.

6. A threaded element according to any one of claims 1 to 5, characterised in that the textile interlinking comprises sewing threads extending predominantly transversely to the axis of the element.

7. A method of producing a threaded element according to any one of claims 1 to 6, wherein a fibrous strand is treated with a curable matrix and introduced into a mould for the curing, characterised in that the fibrous strand is formed in such a manner that, in the peripheral region (3) forming the thread profile, the fibres extend some with right-hand and some with lefthand alignment and are anchored to fibres (5) situated deeper in by textile interlinking, is treated with a matrix and is exposed, in the closed mould, to a compressive pressure which is effective at least in the thread region.

8. A method according to claim 7 for the production of an infernally hollow externally threaded element, characterised in that the compressive pressure is exerted from the inside outwards via a deformable filling in the hollow internal region.

9. An apparatus for carrying out the method according to claim 7 or 8, having a composite mould (20) which can be opened to receive the threaded element and which comprises a mould portion (12, 13) which can be pushed in like a piston in relation to other mould portions, characterised in that the mould (20) is made in four parts with two mould portions (12, 13) which can be pushed in like pistons between an upper portion (10) and a lower portion (11).

10. An apparatus according to claim 9, characterised in that the mould portions (12, 13) which can be pushed in like pistons extend substantially over the length of the threaded element and, transversely to this extent, have a width which is less than the diameter of the thread.

11. An apparatus for carrying out the method according to claim 8, having a composite mould which can be opened to receive the threaded element and which comprises an expansible hose (30) which can be connected to a source (33 to 37) of pressure fluid for a liquid or gaseous pressure fluid, characterised in that the hose (30) is connected, through fittings (31, 32) at both sides, to two pressure pipes (33, 34) which are connected to one another in a pressure circuit.

12. An apparatus according to claim 11, characterised by at least one air evacuation duct (38) which leads from the outside to the circumferential region of the threaded element and can be connected to a vacuum source.

**Revendications**

1. Elément fileté (1), en particulier tige filetée, boulon fileté, tourillon fileté ou élément similaire à filetage extérieur, composé d'une matière fibreuse encastrée dans une matrice, les fibres s'étendant principalement en direction longitudinale axiale comme des fibres sans fin ou des fibres longues et parcourant également le profil fileté (4) sans être coupées, la matière fibreuse présentant, au moins dans une zone d'enveloppe (3) constituant le profil fileté, principalement des fibres s'étendant de manière inclinée par rapport à la direction longitudinale de l'élément (1), caractérisé en ce que les fibres situées dans la zone d'enveloppe (3) constituant le profil fileté s'étendent en étant orientées partiellement avec un pas à droite et partiellement avec un pas à gauche et étant ancrées à des fibres (5) plus profondes par des chaînages textiles.

2. Elément fileté selon la revendication 1, caractérisé en ce que les chaînages textiles s'étendent sur une profondeur d'ancrage faisant plus que 10 % du diamètre fileté.

3. Elément fileté selon la revendication 1 ou 2, caractérisé en ce que la zone d'enveloppe (3) et la zone d'ancrage (5) sont constituées par un tuyau textile (7).

4. Elément fileté selon la revendication 3, caractérisé en ce que la tuyau textile (7) présente une épaisseur de paroi dépassant un quart du diamètre fileté.

5. Elément fileté selon la revendication 3 ou 4, caractérisé en ce que le tuyau textile (7) est rempli intérieurement par des fibres (9) s'étendant axialement.

6. Elément fileté selon l'une des revendications 1 à 5, caractérisé en ce que les chaînages textiles comprennent des fils de couture s'étendant principalement transversalement à l'axe de l'élément.

7. Procédé de fabrication d'un élément fileté selon l'une des revendications 1 à 6, dans lequel un tronçon de fibre est imprégné d'une matrice durcissable et porté au durcissement dans un moule, caractérisé en ce que le tronçon de fibre est formé de manière que les fibres situées dans la zone d'enveloppe (3) constituant le profil fileté s'étendent selon une orientation ayant partiellement un pas à droite et partiellement un pas à gauche et soient ancrées à des fibres (5) plus profondes par des chaînages textiles, le tronçon étant imprégné par une matrice et exposé dans le moule fermé à au moins une pression d'écrasement agissant dans la zone filetée.

8. Procédé selon la revendication 7, pour la fabrication d'un élément à filetage extérieur creux intérieurement, caractérisé en ce que la pression d'écrasement est appliquée dans la zone intérieure creuse, de l'intérieur vers l'extérieur, par l'intermédiaire d'un remplissage déformable.

9. Dispositif pour l'exécution du procédé selon la revendication 7 ou 8, avec un moule ouvrant (20) en plusieurs parties, pour prélever l'élément fileté, moule comprenant une partie de moule (12, 13) enfichable comme un piston vis-à-vis des autres parties de moule, caractérisé en ce que le moule (20) est réalisé en quatre parties, avec deux parties de moule (12, 13) insérables comme un piston, entre une partie supérieure (10) et une partie inférieure (11).

10. Dispositif selon la revendication 9, caractérisé en ce que les parties de moule (12, 13) insérable comme un piston s'étendent à peu près sur la longueur de l'élément fileté et présentent, transversalement à celui-ci, une largeur inférieure au diamètre du filetage.

11. Dispositif pour l'exécution du procédé selon la revendication 8 comportant un moule, ouvrant en plusieurs parties, pour le prélèvement de l'élément fileté, qui comprend un tuyau expansible et raccordable à une source (33 à 37) de milieu sous pression, délivrant un milieu sous pression liquide ou gazeux, caractérisé en ce que le tuyau (30) est raccordé, par l'intermédiaire de raccords (31, 32) placés sur les deux côtés, à deux conduites de pression (33, 34) reliées entre elles en un circuit de pression.

12. Dispositif selon la revendication 11, caractérisé par au moins un canal d'aération (35) menant de l'extérieur à la zone périphérique de l'élément fileté et raccordable à une source de vide.

8

_Fig.1_

_Fig.3_

_Fig.2_

Fig. 4

Fig. 5

Fig. 6

EP 0 191 337 B1

*Fig. 7*